# EUROPEAN PATENT SPECIFICATION

(11) **EP 3 583 362 B1**
(45) Date of publication and mention of the grant of the patent: **07.04.2021**
(21) Application number: 18706301.1
(22) Date of filing: 09.02.2018
(51) Int. Cl.: F24H 8/00, F24H 4/04, F24H 9/16

(54) **TANK FOR THE COLLECTION OF WASTE LIQUID OF A WATER HEATER**
BEHÄLTER ZUM SAMMELN VON ABFALLFLÜSSIGKEIT EINES WASSERERHITZERS
RÉSERVOIR POUR LA COLLECTE DE DÉCHETS LIQUIDES D'UN CHAUFFE-EAU

(30) Priority: 14.02.2017 IT 201700016302
(43) Date of publication of application: 25.12.2019
(73) Proprietor: Ariston Thermo S.p.A., 60044 Fabriano (Ancona) (IT)
(72) Inventor: CANESTRARI, Paolo, 60044 Fabriano (Ancona) (IT); MORBIDELLI, Matteo, 60013 Corinaldo (Ancona) (IT)
(74) Representative: Premru, Rok
(86) International application number: PCT/IB2018/000102
(87) International publication number: WO 2018/150254

(56) References cited:
- EP-A1- 3 171 094
- GB-A- 2 486 508
- GB-A- 2 486 508
- GB-A- 2 510 660
- GB-A- 2 510 660
- US-A1- 2007 261 241
- US-A1- 2007 261 241
- US-A1- 2011 284 094
- US-A1- 2011 284 094
- US-A1- 2016 146 502

## Description

An object of the present invention is a tank for the collection of condensation water of a heat pump water heater or the water released against overpressures from water heaters, adapted to avoid the need of providing a special piping for the channelling and discharge of such liquids.

The invention finds application in the field of appliances for heating water for hygiene-sanitary use (hereinafter "thermo-sanitary appliances"), typically intended to be wall-mounted; by way of a non-limiting example, the category of products whereto the invention may be associated is that of the standard storage water heaters and the monobloc heat pump water heaters (i.e. comprising both the evaporating group and the condensing unit containing the volume of water to be heated in a single enclosure).

It is known that in such kind of products there is a need to canalise a certain quantity of waste liquid, deriving from the condensate produced by the thermodynamic cycle in the heat pump water heaters (hereinafter referred to as "wall-hung appliances AP") or released for safety purposes in the standard storage water heaters (hereinafter summarised with the term "water heater TS"): in both cases, the most commonly used solution in the prior art is to convey the liquid in special pipes with dedicated hydraulic connections and discharge it directly into the sewage system or into appropriate collectors, located close to the appliance and connected thereto by means of anti-aesthetic pipes. An alternative solution to the present invention is disclosed in document GB 2 510 660 A comprising the features of the preamble of independent claim 1.

The object of the present invention is to obviate such type of situations, by providing a tank for the collection of waste liquid (hereinafter simply referred to as "tank") with such features as to carry out the steps of collection, storage and disposal of such liquid in a quick and functional manner.

A further object, at least of some variants of the invention, is to provide means for carrying out different methods of emptying the tank, at the user's discretion. Another object, at least of some variants of the invention, is to improve and automate some functionalities of the appliance with which the tank is associated, according to the filling state of the same.

These and other objects, which shall become clear hereinafter, are achieved with a system comprising a wall-hung thermo-sanitary appliance and a tank for the collection of the waste liquid according to claim 1. Other objects may also be achieved through the additional features of the dependent claims.

Further features of the present invention shall be better highlighted by the following description of a preferred embodiment, in accordance with the patent claims and illustrated, purely by way of a non-limiting example, in the annexed drawing tables, in which:
- Figs. 1.A, 1.B, 1.C, 1.D and 1.E show the tank according to the invention, according to a lower, front, latero-superior, latero-inferior, upper view, respectively;

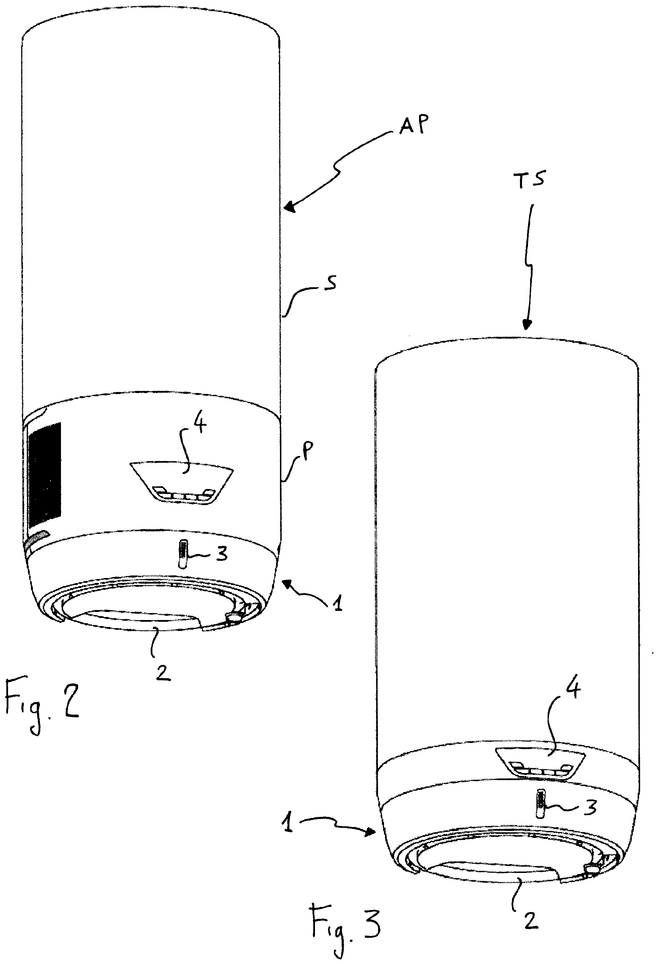

- Fig. 2 depicts the tank according to the invention, associated with a wall-hung appliance AP with pump group P located below the tank S;
- Fig. 3 shows the tank according to the invention, associated with a water heater TS with a circular section;
- Fig. 4 shows the tank according to the invention and its method of coupling to the pump group P of the wall-hung appliance AP;
- Fig. 5 shows a usage method of the tank according to the invention;
- Fig. 6 shows the tank according to the invention, associated with a wall-hung appliance AP with a conventional configuration, i.e. with the pump group P located above the tank S;
- Fig. 7 shows the tank according to the invention, associated with a water heater TS with a rectangular section.

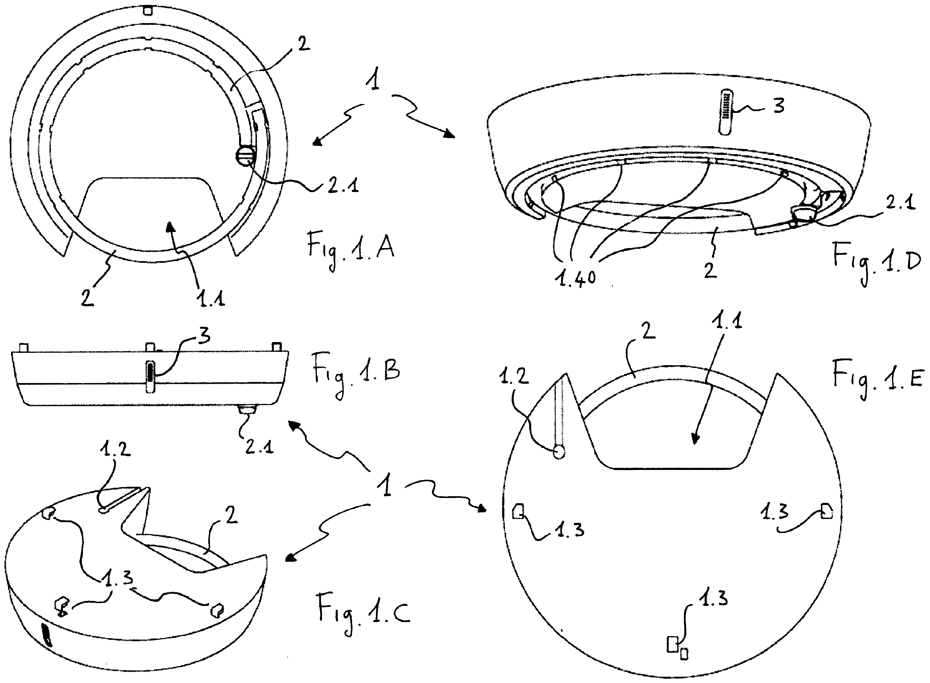

The features of a preferred variant of the tank are now described using the references in the figures. It is noted that the above figures, although schematic, reproduce the elements of the invention in proportions among their spatial dimensions and orientations which are compatible with a possible embodiment. With reference to the Figures 1.A to 1.E, reference numeral 1 indicates the tank for the collection of the waste liquid coming from the termo-sanitary appliance with which it is associated.

It is useful to reiterate that "waste liquid" should be understood in an omnicomprehensive meaning, comprising any liquid produced by the thermo-sanitary appliance, intended to be periodically disposed of because not directly functional to the hygienic-sanitary purposes that the appliance carries out: therefore, when associated with a wall-hung appliance AP, said tank 1 acts as a vessel for the collection of the condensation water produced during the thermodynamic cycle; while, when used in combination with a water heater TS, such tank collects the mains water that said water heater TS releases into the environment for safety purposes in order to avoid overpressures.

Such tank 1 is configured as an accessory intended to be placed below the thermo-sanitary appliance (wall-hung appliance AP or water heater TS), whereto it is removably constrained by known fixing means.

Specifically, said tank 1 comprises a closed vessel with a shape substantially similar to that of the overlying thermo-sanitary appliance; as shown in Figs. 1.A, 1.C and 1.E, preferably, it provides a rear free space 1.1 in order not to interfere with the hydraulic connections of such appliance.

The removable constraint with the appliance takes place by coupling/release of suitable pins 1.3, projecting from the upper surface of the tank 1 and intended to couple with reciprocal grooves made on the lower surface of the overlying thermo-sanitary appliance.

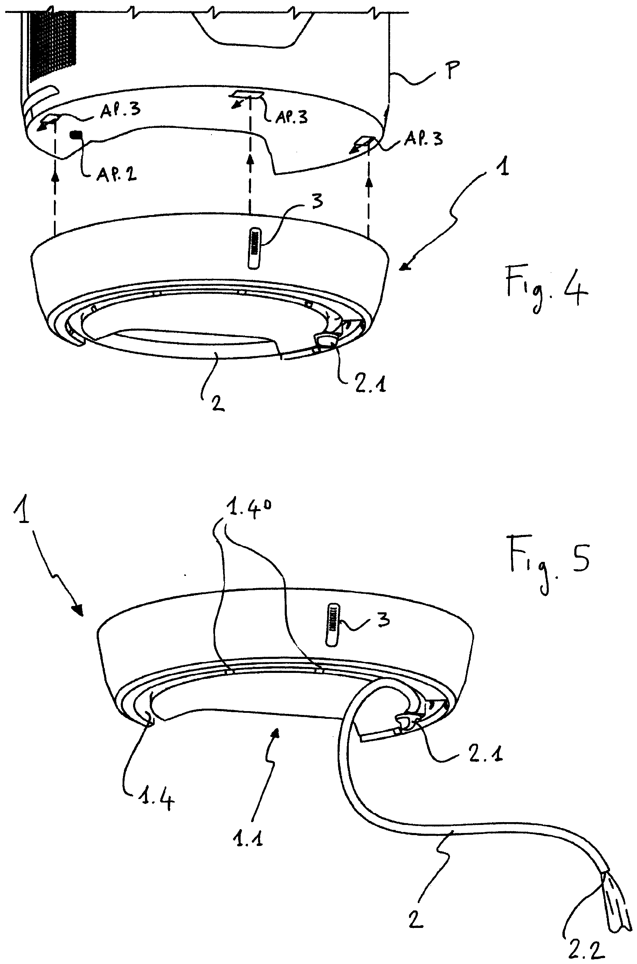

Fig. 4 shows the coupling movement of the tank 1 to the wall-hung appliance AP, consisting in approaching it from the bottom upwards until it contacts the pump group P of such appliance, then translating it horizontally forward, so as to obtain the coupling between said pins 1.3 and the grooves AP.3 present on the lower surface of said pump group P.

The waste water flows by gravity directly from the thermo-sanitary appliance inside the tank 1, flowing out from a draining hole (indicated by the reference AP.2 in the example of Fig. 4) which is in direct communication with an inlet hole 1.2 obtained on the upper surface of such tank 1.

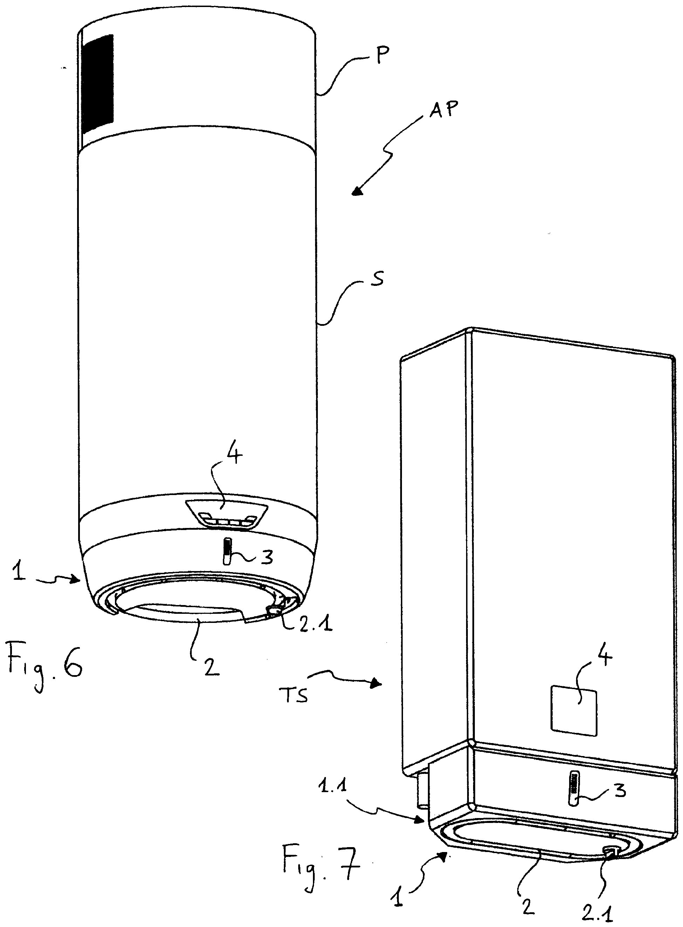

In the example of the figures, said wall-hung appliance AP consists of a heat pump water heater having the pump group P placed below the tank S, and therefore said tank 1 is located below such pump group P and connected thereto; however, in the case of wall-hung appliances AP with traditional configuration (i.e. with pump group P positioned above tank S, see Fig. 6), said tank 1 will be directly constrained to tank S, on the lower surface whereof the grooves AP.3 and the draining hole AP.2 will be made for the communication with the inlet hole 1.2 of the tank 1.

In the event that the tank 1 is associated with a water heater TS, said inlet hole 1.2 is in direct communication with the device against overpressures, adapted to release mains water in order to limit the pressure inside the water heater TS, according to the safety regulation of such type of pressure appliances.

Upon filling of the tank 1, this may be removed from the thermo-sanitary appliance, by releasing it with a movement that is opposite to the one mentioned above and emptied by letting the water collected drain by inclination through the inlet hole 1.2.

Alternatively or additionally, the emptying of the tank 1 may take place according to a second mode, without the need of removing it from the appliance: the tank 1 may, in fact, be further provided with a flexible hose 2 from the outlet end 2.2 whereof the collected water flows, once a special drain valve 2.1 is opened (see Fig. 5).

Said flexible hose 2 is advantageously seated in a cavity 1.4 obtained in the lower surface of the tank 1, retained therein by means of hooks 1.40, so as to remain substantially hidden when there is no need to pull it out for the emptying of the tank.

The tank 1 (preferably having sufficient capacity to contain at least the condensation water produced by the wall-hung appliance AP in about a week of standard use) may further comprise display means to advice the user of the completed filling: by way of an example, the presence of a specific transparent index 3 in the frontal area of the tank can be envisaged, through which the user acquires information on the filling level and on the need to proceed with the emptying may be envisaged.

Appropriate sensors (for example an electromechanical microswitch or a reed magnetic sensor, connected to a float inside the tank 1), also enables the output of visual (by the display 4 of the wall-hung appliance AP or the water heater TS) and/or acoustics warnings to warn the user on the need to proceed with the emptying of the tank 1.

When associated with a wall-hung appliance AP, said sensors can also directly modify the operating behaviour of the appliance according to the filling state of the tank 1, even in the absence of user's activity: upon reaching the maximum level of the condensation liquid, the sensor communicates the information to the control logic of the wall-hung device AP, inhibiting the operation of the thermodynamic group to stop the production of condensation water and enabling the operation of the electric resistance alone in order to guarantee the required hot water.

From the above description the advantages achievable with the tank 1 are clear, mainly connected to the possibility of collecting and disposing in a more effective and comfortable way of the waste liquid produced by certain types of thermo-sanitary appliances.

Said tank 1 avoids, therefore, the need for making specific hydraulic connections for the disposal of the waste liquid, also facilitating its storage in order to allocate it for other uses (for example for feeding the boiler of the steam iron or for topping up the radiator of the car).

The present invention, integrated with the overlying thermo-sanitary appliance, also has aesthetic features considerably more pleasant than the hydraulic connections to the sewage system or the connecting pipes to separate collectors, as currently occurs according to the prior art.

It is clear that several variants of the tank 1 described above are possible to the man skilled in the art, without departing from the novelty scopes of the inventive idea, as well as it is clear that in the practical embodiment of the invention the various components described above may be replaced with technically equivalent ones.

For example, in Figures 1.A to 6 a tank 1 with a circular section is still shown, designed to be installed at the bottom of thermo-sanitary appliances (wall-hung appliance AP and water heater TS) of equal circular section; but obviously such tank 1 may take other shapes in the case of association with an overlying appliance of different shape.

By way of a non-limiting example, Fig. 7 shows a water heater TS with a rectangular section, at the bottom of which the tank 1 according to the present invention is located, also having a rectangular section (with relative rear free space 1.1 so as to not interfere with the hydraulic connections of said water heater TS), so as to maintain unchanged all the features and the consequent advantages mentioned above.

## Claims

1. System comprising a wall-hung thermo-sanitary appliance (AP; TS) and a tank (1) adapted to the collection of the waste liquid produced by such wall-hung thermo-sanitary appliance (AP; TS),
said tank (1) comprising a closed vessel with a shape substantially similar to that of said wall-hung thermo-sanitary appliance (AP; TS), below which it is removably constrained,
**characterised in that**
said tank (1) comprises pins (1.3) projecting from the upper surface thereof, adapted to couple with grooves (AP.3) present on the lower surface of said wall-hung thermo-sanitary appliance (AP; TS).

2. System according to the previous claim,
**characterised in that**
said tank (1) comprises an inlet hole (1.2) obtained on its upper surface, in direct communication with a hole (AP.2) of said wall-hung thermo-sanitary appliance (AP; TS) wherefrom said waste liquid flows.

3. System according to any previous claim,
**characterised in that**
said tank (1) comprises a rear free space (1.1) in order not to interfere with the hydraulic connections of said wall-hung thermo-sanitary appliance (AP; TS).

4. System according to any previous claim,
**characterised in that**
said tank (1) can be emptied by its removal from said wall-hung thermo-sanitary appliance (AP; TS).

5. System according to any previous claim,
**characterised in that**
said tank (1) further comprises a flexible hose (2) in connection with a drain valve (2.1), said flexible hose (2) being adapted to the emptying of said tank (1) without the need of removing it from said wall-hung thermo-sanitary appliance (AP; TS).

6. System according to the previous claim,
**characterised in that**
said flexible hose (2) is seated in a cavity (1.4) obtained in the lower surface of said tank (1) and retained therein by means of hooks (1.40), remaining substantially hidden when not pulled out for the emptying.

7. System according to any previous claim,
**characterised in that**
said tank (1) comprises display means (3) to advise the user regarding the filling level.

8. System according to any previous claim,
**characterised in that**
said tank (1) comprises sensors associated with display means and/or with acoustic means for the output of warnings adapted to warn the user on the need of proceeding with its emptying.

9. System according to any previous claim,
**characterised in that**
said wall-hung thermo-sanitary appliance (AP) is a heat pump water heater, said waste liquid consisting of the condensation water produced during the thermodynamic cycle of said heat pump water heater.

10. System according to claims 8 and 9,
**characterised in that**
said sensors are adapted to directly modify the functionality of said wall-hung thermo-sanitary appliance (AP) when the waste liquid inside said tank (1) has reached the maximum level, inhibiting the operation of a thermodynamic group of the heat pump water heater and enabling the operation of electric resistance only in order to stop the production of the said waste liquid.

11. System according to any previous claims from 1 to 8,
**characterised in that**
said wall-hung thermo-sanitary appliance (TS) is a water heater (TS),
said waste liquid consisting of the mains water released into the environment to avoid overpressures inside said water heater (TS).

## Patentansprüche

1. System, umfassend eine wandhängende Heizungs- und Sanitärvorrichtung (AP; TS) und einen Behälter (1), die zum Sammeln der Abfallflüssigkeit geeignet ist, das von einer solchen wandhängenden Heizungs- und Sanitärvorrichtung (AP; TS) erzeugt wird,
wobei der Behälter (1) ein geschlossenes Gefäß mit einer Form aufweist, die im Wesentlichen jener der wandhängenden Heizungs- und Sanitärvorrichtung (AP; TS) gleich ist, unter der es abnehmbar befestigt ist,
**dadurch gekennzeichnet, dass**
der Behälter (1) Stifte (1.3) aufweist, die aus seiner Oberseite herausragen, die geeignet sind, in Rillen (AP.3) einzugreifen, die auf der Unterseite der wandhängenden Heizungs- und Sanitärvorrichtung (AP; TS) vorhanden sind.

2. System nach dem vorhergehenden Anspruch,
**dadurch gekennzeichnet, dass**
der Behälter (1) ein Einlassloch (1.2) aufweist, das in seiner Oberseite erhalten ist, das in direkter Verbindung mit einem Loch (AP.2) der wandhängenden Heizungs- und Sanitärvorrichtung (AP; TS) steht, aus der die Abfallflüssigkeit fließt.

3. System nach einem der vorhergehenden Ansprüche,
**dadurch gekennzeichnet, dass**
der Behälter (1) einen freien rückwärtigen Raum (1.1) aufweist, um die hydraulischen Anschlüsse der wandhängenden Heizungs- und Sanitärvorrichtung (AP; TS) nicht zu stören.

4. System nach einem der vorhergehenden Ansprüche,
**dadurch gekennzeichnet, dass**
der Behälter (1) durch sein Entfernen von der wandhängenden Heizungs- und Sanitärvorrichtung (AP; TS) entleert werden kann.

5. System nach einem der vorhergehenden Ansprüche,
**dadurch gekennzeichnet, dass**
der Behälter (1) ferner einen flexiblen Schlauch (2) in Verbindung mit einem Ablassventil (2.1) aufweist, wobei der flexible Schlauch (2) geeignet ist, den Behälter (1) zu entleeren, ohne dass er von der wandhängenden Heizungs- und Sanitärvorrichtung (AP; TS) entfernt werden muss.

6. System nach dem vorhergehenden Anspruch,
**dadurch gekennzeichnet, dass**
der flexible Schlauch (2) in einem Hohlraum (1.4) sitzt, der in der Unterseite des Behälters (1) erhalten ist, und darin durch Haken (1.40) gehalten ist, wobei er im Wesentlichen verborgen bleibt, wenn er nicht zum Entleeren herausgezogen wird.

7. System nach einem der vorhergehenden Ansprüche,
**dadurch gekennzeichnet, dass**
der Behälter (1) Anzeigemittel (3) aufweist, um den Benutzer über den Füllstand zu informieren.

8. System nach einem der vorhergehenden Ansprüche,
**dadurch gekennzeichnet, dass**
der Behälter (1) Sensoren aufweist, die mit Anzeigemitteln und/oder akustischen Mitteln zur Ausgabe von Warnungen verbunden sind, die geeignet sind, den Benutzer auf die Notwendigkeit hinzuweisen, den Behälter zu entleeren.

9. System nach einem der vorhergehenden Ansprüche,
**dadurch gekennzeichnet, dass**
die wandhängende Heizungs- und Sanitärvorrichtung (AP) ein Wärmepumpen-Wassererwärmer ist, wobei die Abfallflüssigkeit aus dem Kondenswasser besteht, das während des thermodynamischen Zyklus des Wärmepumpen-Wassererwärmers erzeugt wird.

10. System nach den Ansprüchen 8 oder 9,
**dadurch gekennzeichnet, dass**
die Sensoren geeignet sind, die Funktionalität der wandhängenden Heizungs- und Sanitärvorrichtung (AP) direkt zu modifizieren, wenn die Abfallflüssigkeit in dem Behälter (1) den Maximalstand erreicht hat, wodurch der Betrieb einer thermodynamischen Gruppe des Wärmepumpen-Wassererwärmers blockiert und der Betrieb des elektrischen Widerstands nur aktiviert wird, um die Erzeugung der Abfallflüssigkeit zu stoppen.

11. System nach einem der vorhergehenden Ansprüche von 1 bis 8,
**dadurch gekennzeichnet, dass**
die wandhängende Heizungs- und Sanitärvorrichtung (TS) ein Wassererwärmer (TS) ist, wobei die Abfallflüssigkeit aus dem Leitungswasser besteht, das an die Umgebung abgegeben wird, um Überdrücke in dem Wassererwärmer (TS) zu vermeiden.

## Revendications

1. Système comprenant un appareil thermo-sanitaire mural (AP; TS) et un réservoir (1) adapté à la collecte du liquide résiduaire produit par cet appareil thermo-sanitaire mural (AP; TS),
ledit réservoir (1) comprenant une cuve fermée ayant une forme sensiblement similaire à celle dudit appareil thermo-sanitaire mural (AP; TS), au-dessous duquel elle est contrainte de manière amovible,
**caractérisé en ce que**
ledit réservoir (1) comprend des broches (1.3) faisant saillie de sa surface supérieure, adaptées pour s'accoupler avec des rainures (AP.3) présentes sur la surface inférieure dudit appareil thermo-sanitaire mural (AP; TS).

2. Système selon la revendication précédente,
**caractérisé en ce que**
ledit réservoir (1) comprend un trou d'entrée (1.2) obtenu sur sa surface supérieure, en communication directe avec un trou (AP.2) dudit appareil thermo-sanitaire mural (AP; TS) d'où s'écoule ledit liquide résiduaire.

3. Système selon l'une quelconque des revendications précédentes,
**caractérisé en ce que**
ledit réservoir (1) comprend un espace libre arrière (1.1) afin de ne pas interférer avec les connexions hydrauliques dudit appareil thermo-sanitaire mural (AP; TS).

4. Système selon l'une quelconque des revendications précédentes,
**caractérisé en ce que**
ledit réservoir (1) peut être vidé par son retrait dudit appareil thermo-sanitaire mural (AP; TS).

5. Système selon l'une quelconque des revendications précédentes,
**caractérisé en ce que**
ledit réservoir (1) comprend en outre un tuyau flexible (2) en liaison avec une vanne de vidange (2.1), ledit tuyau flexible (2) étant adapté à la vidange dudit réservoir (1) sans qu'il soit nécessaire de le retirer dudit appareil thermo-sanitaire mural (AP; TS).

6. Système selon la revendication précédente,
**caractérisé en ce que**
ledit tuyau flexible (2) est logé dans une cavité (1.4) obtenue dans la surface inférieure dudit réservoir (1) et y est retenu au moyen de crochets (1.40), restant sensiblement caché lorsqu'il n'est pas sorti pour la vidange.

7. Système selon l'une quelconque des revendications précédentes,
**caractérisé en ce que**
ledit réservoir (1) comporte des moyens d'affichage (3) pour informer l'utilisateur du niveau de remplissage.

8. Système selon l'une quelconque des revendications précédentes,
**caractérisé en ce que**
ledit réservoir (1) comporte des capteurs associés à des moyens d'affichage et/ou à des moyens acoustiques pour la sortie d'avertissements adaptés pour avertir l'utilisateur de la nécessité de procéder à son vidange.

9. Système selon l'une quelconque des revendications précédentes,
**caractérisé en ce que**
ledit appareil thermo-sanitaire mural (AP) est un chauffe-eau à pompe à chaleur, ledit liquide résiduaire étant constitué par l'eau de condensation produite pendant le cycle thermodynamique dudit chauffe-eau à pompe à chaleur.

10. Système selon les revendications 8 et 9,
**caractérisé en ce que**
lesdits capteurs sont adaptés pour modifier directement la fonctionnalité dudit appareil thermo-sanitaire mural (AP) lorsque le liquide résiduaire à l'intérieur dudit réservoir (1) a atteint le niveau maximum, en inhibant le fonctionnement d'un groupe thermodynamique du chauffe-eau de la
pompe à chaleur et en permettant le fonctionnement de la résistance électrique uniquement afin d'arrêter la production dudit liquide résiduaire.

11. Système selon l'une quelconque des revendications précédentes de 1 à 8,
**caractérisé en ce que**
ledit appareil thermo-sanitaire mural (TS) est un chauffe-eau (TS), ledit liquide résiduaire étant constitué de l'eau de réseau libérée dans l'environnement pour éviter les surpressions à l'intérieur dudit chauffe-eau (TS).
